# EUROPÄISCHE PATENTSCHRIFT

(11) **EP 2 719 907 B1**
(45) Veröffentlichungstag und Bekanntmachung des Hinweises auf die Patenterteilung: **25.05.2016**
(21) Anmeldenummer: 13186832.5
(22) Anmeldetag: 01.10.2013
(51) Int. Cl.: F16B 21/07, F16B 19/10, B60J 7/12

(54) **Lageranordnung mit Lagerbuchse**
Bearing assembly with bearing sleeve
Agencement de palier avec coussinet

(30) Priorität: 09.10.2012 DE 102012109596
(43) Veröffentlichungstag der Anmeldung: 16.04.2014
(73) Patentinhaber: Webasto-Edscha Cabrio GmbH, 82131 Stockdorf (DE)
(72) Erfinder: Weber, Albert, 94428 Heimhart (DE)
(74) Vertreter: advotec.

(56) Entgegenhaltungen:
- DE-U1- 20 218 778
- DE-U1-202007 010 599
- US-A1- 2010 162 534

## Beschreibung

Die Erfindung betrifft eine Lageranordnung mit den Merkmalen des Oberbegriffs des Patentanspruchs 1.

Aus der Praxis ist es bekannt, Bauteile an einer Trägereinrichtung über eine Lagerbuchse schwenkbar zu lagern. Beispielsweise ist es bei Faltverdecken von Cabriolet-Fahrzeugen gegebenenfalls erforderlich, ein starres Heckfenster verschwenkbar an einem Heckscheibenlenker eines Verdeckgestänges zu lagern. Ein Heckscheibenrahmen bildet dabei eine Trägereinrichtung, in die ein endseitiger Lagerzapfen des Heckscheibenlenkers drehbar bzw. schwenkbar eingreift. Zur Lagerung kann eine Bundbuchse eingesetzt werden, die in einer Ausnehmung des Heckscheibenrahmens angeordnet ist. Eine Sicherung der resultierenden Lagerachse kann mittels einer Sicherungsscheibe oder einer Schraube erfolgen. Auch ist es bekannt, Bauteile in einem Sackloch zu verklipsen. Hierbei besteht aber das Risiko, dass sich die Verklipsung durch etwaig auftretende Kräfte in ungewollter Weise löst, so dass der Lagerzapfen wieder aus der Ausnehmung gezogen werden kann. Auch besteht das Risiko, dass die Verklipsung bricht.

Zur Sicherung von Lagerstellen ist des Weiteren ein Sicherungsklip bekannt, mittels dessen das drehbar gelagerte Bauteil in der Lagerstelle gesichert ist.

Ferner ist es bekannt, Lagerstellen mittels einer Niet zu sichern. Dies hat aber den Nachteil, dass keine zerstörungsfreie Demontage möglich ist.

Aus der Druckschrift US 4,208,075 ist eine Lageranordnung bekannt, die eine Lagerbuchse aufweist, über die ein Zapfen an einem Gehäuse drehbar gelagert werden kann. Die Lagerbuchse weist äußere Rastzungen auf, die jeweils einen Rastabschnitt zum Fixieren der Lagerbuchse an dem Gehäuse aufweist. Des Weiteren sind innere Lagerlaschen vorgesehen, die an dem Zapfen anliegen.

Aus der Druckschrift EP 2 192 311 A2 ist eine Anschlusseinrichtung mit einer Anschlusshülse bekannt, die eine zentrale Aufnahme bildet, in welche ein Anschlusskopf durch eine Einschuböffnung eingeschoben werden kann. Die Anschlusshülse ist einerseits über äußere Rastelemente an einem Träger gesichert. Andererseits ist über innere Rastelemente der Anschlusskopf in der Anschlusshülse gesichert.

Aus der Druckschrift DE 202 18 778 U1 ist ein Verbindungsteil mit einem Stiftelement und einem Aufnahmeelement bekannt, wobei im montierten Zustand eine erste Rastverbindung zwischen dem Stiftelement und dem Aufnahmeelement, sowie eine zweite Rastverbindung zwischen dem Aufnahmeelement und einem Trägerteil besteht.

Der Erfindung liegt die Aufgabe zugrunde, eine Lageranordnung mit einer Lagerbuchse zu schaffen, die eine drehbare Lagerung eines Bauteils an einem Trägerelement ermöglicht und die in einfacher Weise montiert werden kann.

Erfindungsgemäß wird daher eine Lageranordnung mit einem Bauteil und einer Lagerbuchse zur drehbaren Lagerung des Bauteils an einer Trägereinrichtung vorgeschlagen. Die Lagerbuchse umfasst eine Hülse, die in einer korrespondierenden Ausnehmung der Trägereinrichtung fixiert ist und mit einer Umfangswand einen Innenraum zur Aufnahme eines Lagerzapfens des Bauteils begrenzt. Die Hülse umfasst mindestens ein erstes, inneres Rastelement, das den Lagerzapfen in Axialrichtung in der Hülse sichert, sowie ein zweites, äußeres Rastelement, das die Hülse in Axialrichtung in der Ausnehmung der Trägereinrichtung sichert.

Das zweite Rastelement ist aus einer Rastzunge gebildet sein, die ein Abschnitt der Umfangswand der Hülse ist und einen Hakenabschnitt zum Eingriff in eine Rastaufnahme der Ausnehmung der Trägereinrichtung aufweist.

Um einerseits das drehbar zu lagernde Bauteil bzw. den mit der Lagerbuchse versehenen Lagerzapfen des Bauteils in einfacher Weise in der Ausnehmung der Trägereinrichtung montieren oder auch wieder demontieren zu können und andererseits ein ungewolltes Lösen der Lagerbuchse aus der Ausnehmung der Trägereinrichtung zu verhindern, weist der Lagerzapfen bei einer vorteilhaften Ausführungsform an seinem Umfang mindestens eine Montage- und Demontageausnehmung auf, die bei einer Anordnung unterhalb der Rastzunge der Hülse diese hinsichtlich einer Betätigung und einer Montage oder Demontage der Hülse an der Trägereinrichtung bzw. von der Trägereinrichtung freigibt und die bei einer Verdrehung gegenüber der Rastlasche diese hinsichtlich einer Betätigung sperrt. Die Montage- und Demontageausnehmung stellt also eine lokale Vertiefung des Lagerzapfens dar, in welche die Rastzunge zur Montage bzw. Demontage gedrückt werden kann. Wenn die Montage- und Demontageaussackung gegenüber der Rastzunge verdreht ist und Letztere an einer zumindest bereichsweise zylindrischen Außenfläche des Lagerzapfens anliegt, ist eine Betätigung der Rastzunge gesperrt. Damit kann ein ungewolltes Lösen der Lagerbuchse von der Trägereinrichtung gesperrt werden. Die gegenüber der Rastzunge verdrehte Stellung des Lagerzapfens entspricht einer Arbeitsstellung, wohingegen die Montage- bzw. Demontagestellung vorliegt, wenn die Rastzunge und die Montage- und Demontageausnehmung miteinander zur Deckung kommen.

Die Lagerbuchse wird sowohl mit dem Lagerzapfen des Bauteils als auch mit der Trägereinrichtung verklipst bzw. verrastet. Zur Lagerung des Bauteils mit dem Lagerzapfen an der Trägereinrichtung ist mithin nur ein einziges Bauteil erforderlich, das von der Lagerbuchse selbst gebildet wird. Durch die Verrastung der Hülse an dem Lagerzapfen und an der Trägereinrichtung ist der Lagerzapfen ausziehsicher in der Ausnehmung der Trägereinrichtung angeordnet. Die Ausnehmung der Trägereinrichtung ist beispielsweise als Sackloch ausgebildet, wobei bei der Montage der mit der Lagerbuchse versehene Lagerzapfen des Bauteils in einfacher Weise in die Ausnehmung eingeschoben wird, so dass die Hülse dort verrastet.

Es ist somit eine einfache Handmontage möglich. Auch kann durch die Lagerbuchse eine Trennung zwischen der Trägereinrichtung und dem Bauteil mit dem Lagerzapfen erreicht werden, was sich insbesondere hinsichtlich einer etwaigen Geräuschentwicklung und/oder einer elektrischen Entkopplung als vorteilhaft erweisen kann.

Bei einer bevorzugten Ausführungsform der Lagerbuchse ist das erste Rastelement aus einer Rastlasche gebildet, die ein Abschnitt der Umfangswand der Hülse ist und an ihrem stirnseitigen Ende einen Rastvorsprung zum Eingriff in eine Ringnut des Lagerzapfens aufweist. Die Rastlasche gewährleistet also eine Ausziehsicherung für den Lagerzapfen aus der Lagerbuchse, wobei gleichzeitig durch den Eingriff des Rastvorsprungs in die Ringnut des Lagerzapfens dessen Drehung in der Lagerbuchse gewährleistet werden kann.

Zur Montageerleichterung weist eine zweckmäßige Ausführungsform der Lagerbuchse eine Rastlasche mit einem Rastvorsprung auf, der an seiner dem stirnseitigen Ende der Rastlasche abgewandten Flanke eine Anfahrschräge bzw. -rampe hat. Damit kann die Lagerbuchse nach der Erfindung in einfacher Weise auf den Lagerzapfen des zu lagernden Bauteils geschoben werden, und zwar bis zu einer Relativlage, in der der Rastvorsprung in die Ringnut des Lagerzapfens eingreift bzw. einschnappt.

Bei einer weiteren vorteilhaften Ausführungsform der Lagerbuchse sichert das zweite Element die Hülse drehfest in der Ausnehmung der Trägereinrichtung.

Die drehfeste Sicherung der Hülse in der Ausnehmung der Trägereinrichtung kann beispielsweise dadurch realisiert werden, dass die Rastaufnahme für den Hakenabschnitt der Rastzunge ein fensterartiger Ausschnitt der Ausnehmung der Trägereinrichtung ist, dessen Breite in Umfangsrichtung der Hülse im Wesentlichen der Breite der Rastzunge entspricht.

Um die Hülse lösbar an der Trägereinrichtung sichern zu können, kann der fensterartige Ausschnitt der Ausnehmung der Trägereinrichtung eine Wandung der Trägereinrichtung durchgreifen, so dass die Rastzunge durch den fensterartigen Ausschnitt hindurch manuell oder auch mittels eines Werkzeugs zugänglich ist.

Zur Montageerleichterung hat der Hakenabschnitt bei einer zweckmäßigen Ausführungsform eine rampenartige Flanke und eine bezogen auf die Achse der Hülse radiale Flanke. Die rampenartige Flanke ist bezogen auf die Einschubrichtung der Hülse in die Ausnehmung der Trägereinrichtung vorne bzw. stirnseitig angeordnet.

Um die Lagerbuchse gegenüber der Trägereinrichtung verdrehsicher montieren zu können, weist die Hülse bei einer bevorzugten Ausführungsform eine Verdrehsicherung auf. Die Verdrehsicherung ist beispielsweise aus einer axialen Rippe gebildet, die am Umfang der Hülse ausgebildet ist und zum Eingriff in eine korrespondierende Axialnut der Ausnehmung der Trägereinrichtung ausgelegt ist. Eine solche Rippe ist in einfacher Weise realisierbar, insbesondere wenn die Lagerbuchse aus Kunststoff hergestellt ist.

Um eine exakte axiale Positionierung der Lagerbuchse in der Ausnehmung der Trägereinrichtung zu erreichen, weist die Hülse bei einer bevorzugten Ausführungsform an ihrem Umfang einen Anschlag zur Anlage an der Trägereinrichtung auf. Vorzugsweise ist der Anschlag von einem Ringbund gebildet.

Die Lageranordnung kann insbesondere bei einem Kraftfahrzeug, insbesondere einem Verdeck eines Cabriolet-Fahrzeugs realisiert sein. Beispielsweise stellt die Trägereinrichtung einen Rahmen einer Heckscheibe des Cabriolet-Verdecks dar, wohingegen das drehbar gelagerte Bauteil ein Heckscheibenlenker ist, der einem Verdeckgestänge des Verdecks zugeordnet ist. Der Heckscheibenlenker weist damit an seinem Ende einen Lagerzapfen auf, der über die erfindungsgemäß ausgebildete Lagerbuchse in eine Ausnehmung des Heckscheibenrahmens eingesteckt ist.

Weitere Vorteile und vorteilhafte Ausgestaltungen des Gegenstandes der Erfindung sind der Beschreibung, der Zeichnung und den Patentansprüchen entnehmbar.

Ein Ausführungsbeispiel einer Lageranordnung mit einer Lagerbuchse ist in der Zeichnung schematisch vereinfacht dargestellt und wird in der nachfolgenden Beschreibung näher erläutert. Es zeigt:
- Figur 1: eine ausschnittsweise, geschnittene Darstellung eines Cabriolet-Faltverdecks im Bereich von dessen Heckscheibe;

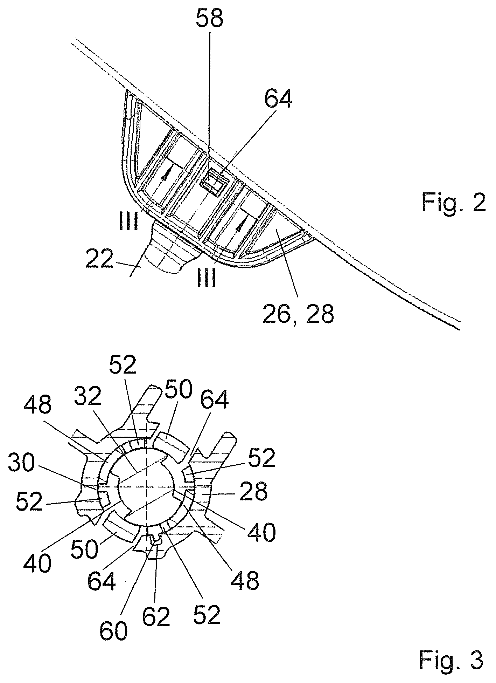

- Figur 2: eine Seitenansicht eines Anlenkbereichs eines Rahmens der Heckscheibe an einen Heckscheibenlenker;
- Figur 3: einen Schnitt durch den Anlenkbereich nach Figur 2 entlang der Linie III-III in Figur 2;
- Figur 4: eine perspektivische Darstellung eines Lagerzapfens des Heckscheibenlenkers;
- Figur 5: eine perspektivische Darstellung des Lagerzapfens mit aufgesetzter Lagerbuchse;
- Figur 6: eine perspektivische Darstellung der Lagerbuchse in Alleinstellung;
- Figur 7: eine erste Seitenansicht der Lagerbuchse;
- Figur 8: einen Schnitt durch die Lagerbuchse entlang der Linie VIII-VIII in Figur 7;
- Figur 9: eine zweite, gegenüber der Ansicht in Figur 7 um 90° gedrehte Seitenansicht der Lagerbuchse;
- Figur 10: einen Schnitt durch die Lagerbuchse entlang der Linie X-X in Figur 9;
- Figur 11: den Lagerzapfen beim Aufsetzen der Lagerbuchse;
- Figur 12: den Lagerzapfen mit aufgesetzter Lagerbuchse beim Einschieben in eine Ausnehmung des Anlenkbereichs des Heckscheibenrahmens;
- Figur 13: den am Heckscheibenrahmen montierten Lagerzapfen;
- Figur 14: einen Schnitt durch den montierten Lagerzapfen in einer Montage- bzw. Demontagestellung; und
- Figur 15: einen Figur 14 entsprechenden Schnitt, jedoch in einer Arbeitsstellung des Lagerzapfens gegenüber der Lagerbuchse.

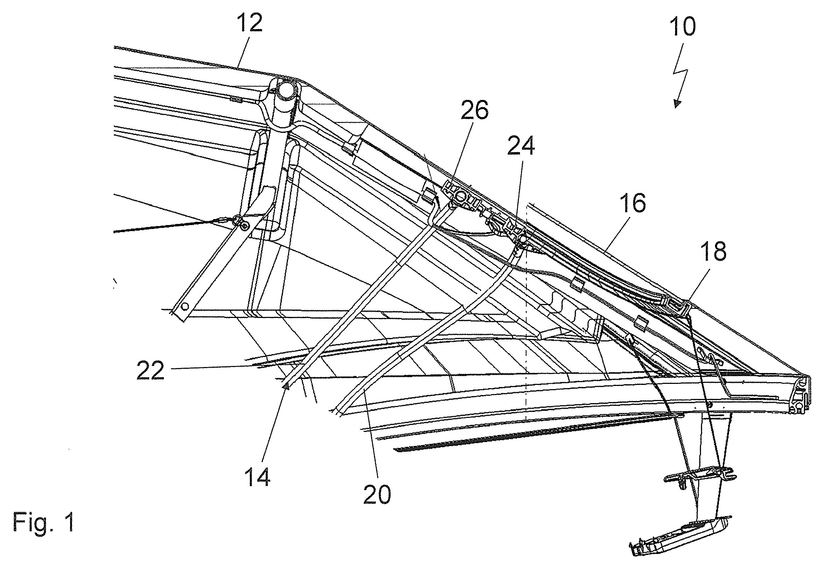

In Figur 1 ist ein Faltverdeck 10 eines als Cabriolet-Fahrzeug ausgebildeten Kraftfahrzeuges dargestellt. Das Faltverdeck 10 ist zwischen einer in Figur 1 dargestellten, einen Innenraum des Kraftfahrzeuges überspannenden Schließstellung und einer nicht dargestellten Ablagestellung verstellbar, in der der Fahrzeuginnenraum nach oben freigegeben ist und das Faltverdeck 10 in einem heckseitigen Ablagebereich abgelegt ist. Das Faltverdeck 10 umfasst einen Verdeckbezug 12 sowie ein Verdeckgestänge 14 zum Aufspannen und Verstellen des Verdeckbezuges 12.

In einem bezogen auf die Vorwärtsfahrtrichtung des Kraftfahrzeuges heckseitig angeordneten Abschnitt begrenzt der Verdeckbezug 12 eine Heckscheibe 16, die mit einem Heckscheibenrahmen 18 versehen ist. Bezogen auf eine vertikale Fahrzeuglängsmittelebene sind an den Heckscheibenrahmen 18 beidseits jeweils zwei Heckscheibenlenker 20 und 22 jeweils über einen Lagerbereich 24 bzw. 26 angelenkt. Die beiden Lagerbereiche 24 und 26 sind in vergleichbarer Weise ausgebildet, weswegen im Folgenden lediglich der Lagerbereich 26 beschrieben ist.

Der Lagerbereich 26 ist aus einem an dem Heckscheibenrahmen 18 ausgebildeten Trägerabschnitt 28 mit einer sacklochartigen Ausnehmung 30, einem stirnseitigen Lagerzapfen 32 des Heckscheibenlenkers 22 und einer Lagerbuchse 34 gebildet, die bezogen auf die Achse des Lagerzapfens 32 in radialer Richtung zwischen dem Lagerzapfen 32 und dem Trägerabschnitt 28 angeordnet ist. Im vorliegenden Fall stellt also der Heckscheibenlenker 22 das an dem Trägerabschnitt 28 drehbar bzw. schwenkbar gelagerte Bauteil dar.

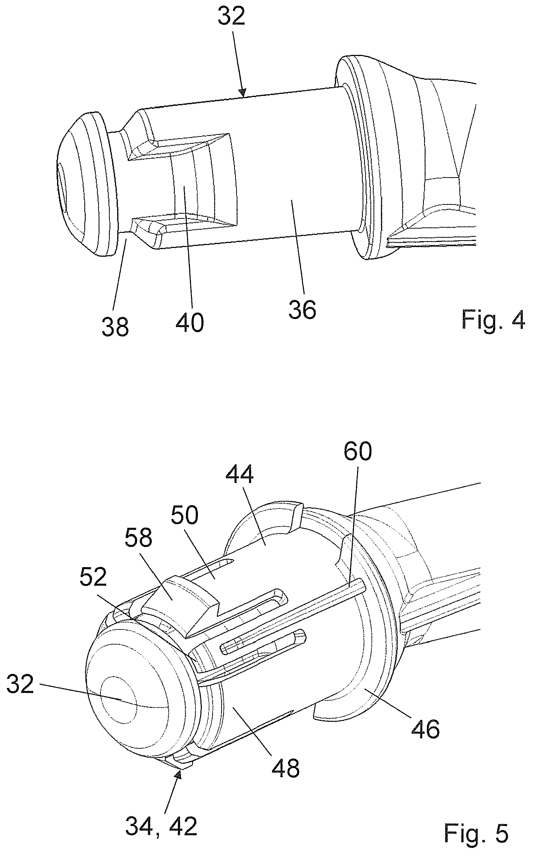

Wie Figur 4 zu entnehmen ist, hat der Lagerzapfen 32 eine im Wesentlichen zylindrische Umfangsfläche, die in eine nahe der Stirnseite des Lagerzapfens 32 ausgebildete Ringnut 38 übergeht. Des Weiteren sind an der Umfangsfläche 36 des Lagerzapfens 32 zwei Montage- und Demontageausnehmungen 40 ausgebildet, die jeweils eine wannenartige Vertiefung des Lagerzapfens 32 darstellen und die in Umfangsrichtung des Lagerzapfens 32 um 180° zueinander versetzt sind.

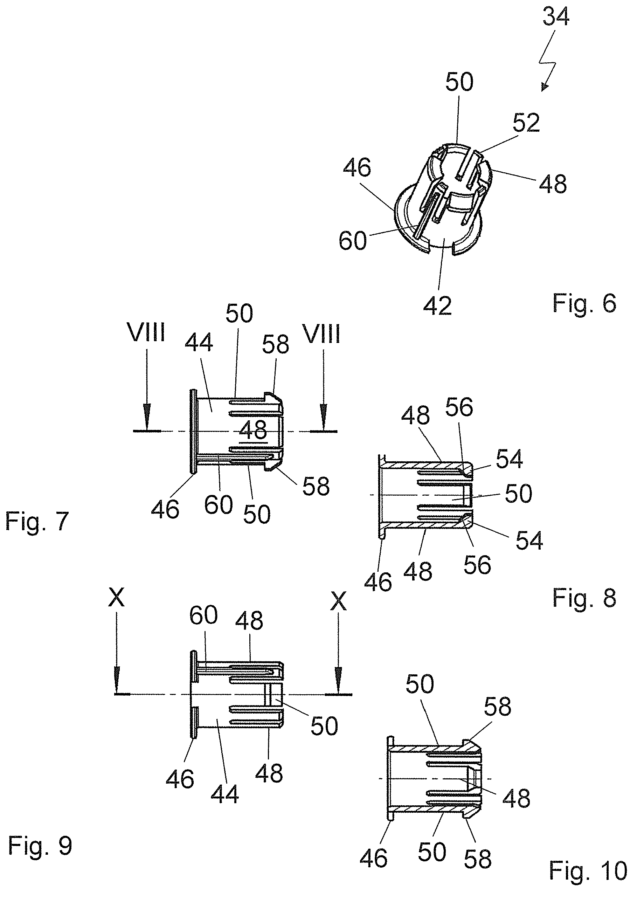

Die Lagerbuchse 34, die in den Figuren 6 bis 10 in Alleinstellung dargestellt ist, stellt ein Kunststoffspritzgussteil dar, das aus einer Hülse 42 gebildet ist, die einen in Umfangsrichtung durchgängigen, zylindrischen Basisabschnitt 44 aufweist. Einerseits ist der Basisabschnitt 44 von einem Ringbund 46 begrenzt. An der dem Ringbund 46 abgewandten Seite geht der Basisabschnitt 44 in zwei Rastlaschen 48, die bezogen auf die Umfangsrichtung der Hülse 42 um 180° zueinander versetzt sind, in zwei Rastzungen 50, die ebenfalls in Umfangsrichtung der Hülse 42 um 180° zueinander versetzt sind, und in vier Übergangszungen 52 über, die jeweils zwischen den Rastlaschen 48 und Rastzungen 50 angeordnet sind und von diesen durch Schlitze getrennt sind. Der Basisabschnitt 44, die Rastlaschen 48, die Rastzunge 50 und die Übergangszungen 52 bilden zusammen eine Umfangswand der Hülse 42.

Die Rastlaschen 48 dienen zur Fixierung der Lagerbuchse 34 an dem Lagerzapfen 32 des Heckscheibenlenkers 22 und weisen hierzu in ihren endseitigen Stirnbereichen jeweils einen radial in Richtung Hülsenachse weisenden Rastvorsprung 54 auf, der im montierten Zustand der Lagerbuchse 34 in die Ringnut 38 des Lagerzapfens 32 eingreift. Der Rastvorsprung 54 hat eine erste Flanke, die bezogen auf die Achse der Hülse 42 als Radialfläche ausgebildet ist und eine Stirnseite der Hülse 42 bildet. An seiner dieser Stirnseite abgewandten Flanke weist der Rastvorsprung 54 eine Anfahrrampe 56 auf. Die Form des Rastvorsprungs 54 korrespondiert mit dem Querschnitt der Ringnut 38 des Lagerzapfens 32.

Die Rastzungen 50 weisen in ihren dem Ringbund 46 abgewandten Endabschnitten jeweils einen Hakenabschnitt 58 auf, der bezogen auf die Achse der Hülse 42 in radialer Richtung nach außen vorsteht. Die Hakenabschnitte 58 haben jeweils eine dem Ringbund 46 abgewandte Flanke, die rampenartig ausgebildet ist, und eine dem Ringbund 46 zugewandte Flanke, die bezogen auf die Achse der Hülse 42 als Radialfläche ausgebildet ist.

Des Weiteren ist an der äußeren Umfangsfläche der Hülse 42 eine Axialrippe 60 ausgebildet, die sich von dem Ringbund 46 über den Basisabschnitt 44 bis auf eine Übergangszunge 52 erstreckt und im montierten Zustand in eine Axialnut 62 eingreift, die in der Ausnehmung 30 des Trägerabschnitts 28 des Heckscheibenrahmens 18 ausgebildet ist. Die Axialrippe 60 wirkt damit in Verbindung mit der Axialnut 62 als Verdrehsicherung für die Lagerbuchse 34 gegenüber dem Trägerabschnitt 28.

Die Ausnehmung 30 des Trägerabschnitts 28 des Heckscheibenrahmens 18 umfasst an ihrer Umfangswand zwei fensterartige Ausschnitte 64, in die im montierten Zustand jeweils einer der Hakenabschnitte 58 der Rastzungen 50 eingreift. In Umfangsrichtung haben die fensterartigen Ausschnitte 64 eine Breite, die der Breite der Hakenabschnitte 58 in Umfangsrichtung der Hülse 42 entspricht. Die Lagerbuchse 34 sitzt damit drehfest in der Ausnehmung 30. Des Weiteren sind die Rastzungen 50 über die Hakenabschnitte 58 jeweils so in den fensterartigen Ausschnitten 64 verrastet, dass die radialen Flanken der Hakenabschnitte 58 an einem Rand des betreffenden Ausschnitts 64 anliegen und die Lagerbuchse 34 ausziehgesichert in der Ausnehmung 30 sitzt.

Die Ausschnitte 64 durchgreifen jeweils eine Wand des Trägerabschnitts 28. Damit sind die Hakenabschnitte 58 im montierten Zustand der Lagerbuchse 34 von außen zugänglich bzw. betätigbar.

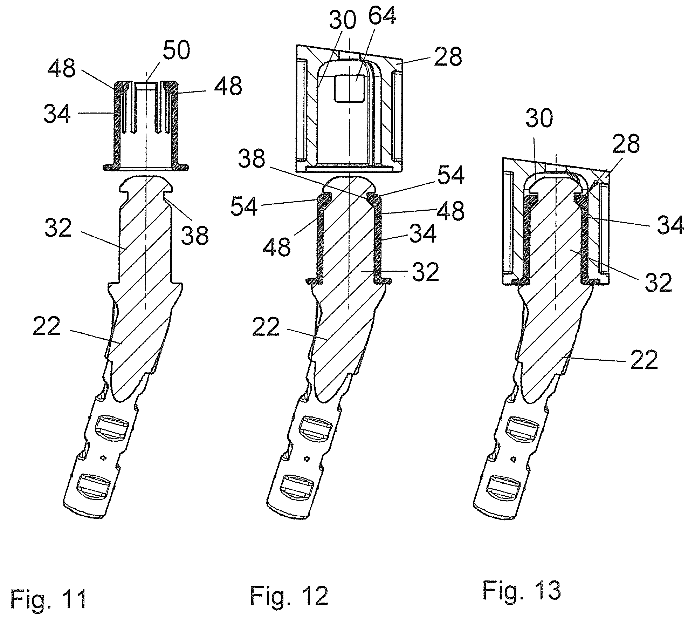

Die Montage der Lageranordnung, die aus dem Trägerabschnitt 28, der Lagerbuchse 34 und dem Lagerzapfen 32 gebildet ist, wird nachfolgend anhand der Figuren 11 bis 15 beschrieben.

In einem ersten Montageschritt wird die Lagerbuchse 34 auf den Lagerzapfen 32 aufgesteckt, so dass die Rastvorsprünge 54 der Rastlaschen 48 in die Ringnut 38 des Lagerzapfens 32 einschnappen.

Anschließend wird, sofern erforderlich, die Lagerbuchse 34 gegenüber dem Lagerzapfen 32 in eine Drehstellung gebracht, in der die Rastzungen 50 mit den Montage- und Demontageausnehmungen 40 des Lagerzapfens 32 fluchten. In dieser Stellung können die Rastzungen 50 in Richtung der Achse des Lagerzapfens 32 gedrückt werden.

In einem nachfolgenden Schritt wird der Lagerzapfen 32 mit montierter und positionierter Lagerbuchse 34 so in die Ausnehmung 30 des Trägerabschnitts 28 eingeführt, dass die Axialrippe 60 in der Axialnut 62 geführt ist. Hierbei werden die Rastzungen 50 in die Montage- und Demontageausnehmungen 40 gedrückt. Sobald die Hakenabschnitte 58 der Rastzungen 50 die fensterartigen Ausschnitte 64 der Ausnehmung 30 erreicht haben, erfolgt eine Verrastung der Rastzungen 50 über die Hakenabschnitte 58 aufgrund des Rückstellvermögens der Rastzungen 50 in radialer Richtung.

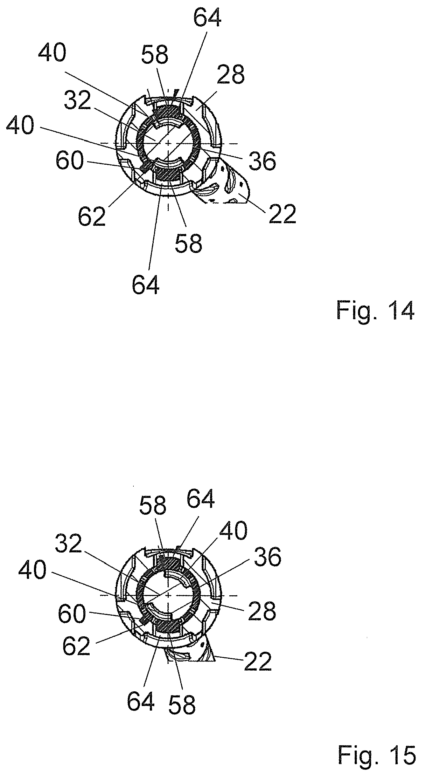

Ausgehend von der in den Figuren 13 und 14 dargestellten Stellung kann nun der Heckscheibenlenker 20 und damit der Lagerzapfen 32 gegenüber der ausziehsicher und drehfest in der Ausnehmung 30 angeordneten Lagerbuchse in die in Figur 15 dargestellte Stellung verdreht werden, in welcher die Montage- und Demontageausnehmungen 40 des Lagerzapfens 32 gegenüber den Rastzungen 50 in Umfangsrichtung versetzt bzw. verdreht sind. Damit können die Rastzungen 50 nicht mehr in Richtung der Achse des Lagerzapfens 32 gedrückt werden, da sie direkt an dem Lagerzapfen 32 anliegen. Vielmehr können die Hakenabschnitte 58 nicht ungewollter Weise aus den Ausschnitten 64 gedrückt werden, wodurch ein Lösen des Lagerzapfens 32 aus dem Trägerabschnitt 28 möglich wäre. Dies kann nur dadurch erreicht werden, dass der Lagerzapfen 32 wieder in die in Figur 14 dargestellte Stellung gedreht wird, in welcher die Rastzungen 50 in die Montage- und Demontageausnehmungen 40 des Lagerzapfens 32 gedrückt werden können, so dass die Hakenabschnitte 58 aus den fensterartigen Ausschnitten 64 gebracht werden können.

### Bezugszeichenliste

- 10: Faltverdeck
- 12: Verdeckbezug
- 14: Verdeckgestänge
- 16: Heckscheibe
- 18: Heckscheibenrahmen
- 20: Heckscheibenlenker
- 22: Heckscheibenlenker
- 24: Lagerbereich
- 26: Lagerbereich
- 28: Trägerabschnitt
- 30: Ausnehmung
- 32: Lagerzapfen
- 34: Lagerbuchse
- 36: Umfangsfläche
- 38: Ringnut
- 40: Montage- und Demontageausnehmungen
- 42: Hülse
- 44: Basisabschnitt
- 46: Ringbund
- 48: Rastlasche
- 50: Rastzunge
- 52: Übergangszungen
- 54: Rastvorsprung
- 56: Anfahrrampe
- 58: Hakenabschnitt
- 60: Axialrippe
- 62: Axialnut
- 64: Ausschnitt

## Patentansprüche

1. Lageranordnung, umfassend eine Trägereinrichtung, ein Bauteil und eine Lagerbuchse (34) zur drehbaren Lagerung des Bauteils an der Trägereinrichtung, wobei die Lagerbuchse (34) eine Hülse (42) umfasst, die in einer korrespondierenden Ausnehmung (30) der Trägereinrichtung fixierbar ist und mit einer Umfangswand einen Innenraum zur Aufnahme eines Lagerzapfens (32) des Bauteils begrenzt, wobei die Hülse (42) mindestens ein inneres, erstes Rastelement, das den Lagerzapfen (32) in Axialrichtung in der Hülse (42) sichert, und ein zweites, äußeres Rastelement umfasst, das die Hülse (42) in Axialrichtung in der Ausnehmung (30) der Trägereinrichtung sichert, wobei das zweite Rastelement aus einer Rastzunge (50) gebildet ist, die ein Abschnitt der Umfangswand der Hülse (42) ist und einen Hakenabschnitt (58) zum Eingriff in eine Rastaufnahme der Ausnehmung (30) der Trägereinrichtung aufweist, **dadurch gekennzeichnet, dass** der Lagerzapfen (32) an seinem Umfang mindestens eine Montage- und Demontageausnehmung (40) aufweist, deren Breite in Umfangsrichtung zumindest weitgehend mit der Breite der Rastzunge (50) in Umfangsrichtung korrespondiert.

2. Lageranordnung nach Anspruch 1, **dadurch gekennzeichnet, dass** das erste Rastelement aus einer Rastlasche (48) gebildet ist, die ein Abschnitt der Umfangswand der Hülse (42) ist und an ihrem stirnseitigen Ende einen Rastvorsprung (54) zum Eingriff in eine Ringnut (38) des Lagerzapfens (32) aufweist.

3. Lageranordnung nach Anspruch 2, **dadurch gekennzeichnet, dass** der Rastvorsprung (54) an seiner dem stirnseitigen Ende der Rastlasche (48) abgewandten Flanke eine Anfahrrampe (56) hat.

4. Lageranordnung nach einem der Ansprüche 1 bis 3, **dadurch gekennzeichnet, dass** das zweite Rastelement die Hülse (42) drehfest in der Ausnehmung (30) der Trägereinrichtung sichert.

5. Lageranordnung nach Anspruch 1, **dadurch gekennzeichnet, dass** die Rastaufnahme ein fensterartiger Ausschnitt (64) der Ausnehmung (30) der Trägereinrichtung ist.

6. Lageranordnung nach einem der Ansprüche 1 bis 5, **dadurch gekennzeichnet, dass** der Hakenabschnitt (58) eine rampenartige Flanke und eine bezogen auf die Achse der Hülse (42) radiale Flanke hat.

7. Lageranordnung nach einem der Ansprüche 1 bis 6, **gekennzeichnet durch** eine Verdrehsicherung der Hülse (42) gegenüber der Trägereinrichtung, wobei die Verdrehsicherung aus einer Axialrippe (60) gebildet ist, die am Umfang der Hülse (42) ausgebildet ist und zum Eingriff in eine korrespondierende Axialnut (62) der Ausnehmung (30) der Trägereinrichtung ausgelegt ist.

8. Lageranordnung nach einem der Ansprüche 1 bis 7, **dadurch gekennzeichnet, dass** die Hülse (42) am Umfang einen Anschlag zur Anlage an der Trägereinrichtung aufweist.

9. Lageranordnung nach Anspruch 8, **dadurch gekennzeichnet, dass** der Anschlag von einem Ringbund (46) gebildet ist.

10. Lageranordnung nach einem der Ansprüche 1 bis 9, **dadurch gekennzeichnet, dass** die Trägereinrichtung ein Trägerabschnitt (28) eines Rahmens (18) einer Heckscheibe (16) eines Cabrioletverdecks ist und das Bauteil ein Heckscheibenlenker (22) eines Verdeckgestänges (14) des Cabrioletverdecks ist.

## Claims

1. A bearing arrangement, comprising a carrier device, a component part and a bearing socket (34) for rotatably bearing the component part at the carrier device, wherein the bearing socket (34) comprises a sleeve (42) which can be fixed in a corresponding recess (30) of the carrier device and which delimits with a peripheral wall an innér space for receiving a bearing journal (32) of the component part, wherein the sleeve (42) comprises at least an inner first catch element which secures the bearing journal (32) in the axial direction in the sleeve (42) and an outer second catch element which secures the sleeve (42) in the axial direction in the recess (30) of the carrier device, wherein the second catch element is formed from a catch tongue (50) which is a portion of the peripheral wall of the sleeve (42) and which includes a hooked portion (58) for engagement in a catch receiving member of the recess (30) of the carrier device, **characterised in that** the bearing journal (32) includes at the periphery thereof at least one assembly and disassembly recess (40) whose width in the peripheral direction at the very least substantially corresponds to the width of the catch tongue in the peripheral direction.

2. The bearing arrangement as claimed in claim 1, **characterised in that** the first catch element is formed from a catch flap (48) which is a portion of the peripheral wall of the sleeve (42) and which includes at the end-face end thereof a catch projection (54) for engagement in an annular groove (38) of the bearing journal (32).

3. The bearing arrangement as claimed in claim 2, **characterised in that** the catch projection (54) has, at the flank thereof facing away from the end-face end of the catch flap (48), an inclined starting ramp (56).

4. The bearing arrangement as claimed in one of claims 1 to 3, **characterised in that** the second catch element secures the sleeve (42) in the recess (30) of the carrier device in a rotationally secure manner.

5. The bearing arrangement as claimed in claim 1, **characterised in that** the catch receiving member is an aperture-like cut-out (64) of the recess (30) of the carrier device.

6. The bearing arrangement as claimed in one of claims 1 to 5, **characterised in that** the hooked portion (58) has a ramp-like flank and a flank which is radial in relation to the axis of the sleeve (42).

7. The bearing arrangement as claimed in one of claims 1 to 6, **characterised by** a torsion prevention means of the sleeve (42) with respect to the carrier device, wherein the torsion prevention means is formed from an axial rib (60) which is realised at the periphery of the sleeve (42) and which is constructed for engagement in a corresponding axial groove (62) of the recess (30) of the carrier device.

8. The bearing arrangement as claimed in one of claims 1 to 7, **characterised in that** the sleeve (42) includes at the periphery a stop for abutment against the carrier device.

9. The bearing arrangement as claimed in claim 8, **characterised in that** the stop is formed by an annular collar (46).

10. The bearing arrangement as claimed in one of claims 1 to 9, **characterised in that** the carrier device is a carrier portion (28) of a frame (18) of a rear window (16) of a cabriolet roof and **in that** the component part is a rear window connection rod (22) of a roof rod assembly (14) of the cabriolet roof.

## Revendications

1. Agencement de palier, comportant un appareillage de support, un élément de construction et un coussinet (34) pour monter l'élément de construction à l'appareillage de support de façon à pouvoir pivoter, dans lequel le coussinet (34) comporte une cosse (42) qui peut être fixée dans une échancrure (30) correspondante de l'appareillage de support et qui délimite, avec une paroi périphérique, un intérieur pour recevoir un tenon (32) de palier de l'élément de construction, dans lequel la cosse (42) comporte au moins un premier élément d'enclenchement intérieur qui bloque le tenon (32) de palier dans la direction axiale dans la cosse (42) et un deuxième élément d'enclenchement extérieur qui bloque la cosse (42) dans la direction axiale dans l'échancrure (30) de l'appareillage de support, dans lequel le deuxième élément d'enclenchement est formé à partir d'une languette (50) d'enclenchement qui est une partie de la paroi périphérique de la cosse (42) et qui présente une partie (58) crochue pour pénétrer dans un logement d'enclenchement de l'échancrure (30) de l'appareillage de support, **caractérisé en ce que** le tenon (32) de palier présente, à sa périphérie, au moins une échancrure (40) de montage et démontage, la largeur de ladite échancrure dans la direction périphérique correspond du moins en grande partie à la largeur de la languette d'enclenchement dans la direction périphérique.

2. Agencement de palier selon la revendication 1, **caractérisé en ce que** le premier élément d'enclenchement est formé à partir d'un collier (48) d'enclenchement qui est une partie de la paroi périphérique de la cosse (42) et qui présente, à son extrémité frontale, un épaulement (54) d'enclenchement pour pénétrer dans une rainure à anneaux (38) du tenon (32) de palier.

3. Agencement de palier selon la revendication 2, **caractérisé en ce que** l'épaulement (54) d'enclenchement a, à son flanc tourné à l'opposé de l'extrémité frontale du collier (48) d'enclenchement, une rampe d'attaque (56).

4. Agencement de palier selon l'une quelconque des revendications 1 à 3, **caractérisé en ce que** le deuxième élément d'enclenchement bloque la cosse (42) dans l'échancrure (30) de l'appareillage de support de façon à résister à la torsion.

5. Agencement de palier selon la revendication 1, **caractérisé en ce que** le logement d'enclenchement est une découpure (64) de type fenêtre de l'échancrure (30) de l'appareillage de support.

6. Agencement de palier selon l'une quelconque des revendications 1 à 5, **caractérisé en ce que** la partie (58) crochue a un flanc de type rampe et un flanc qui est radial relativement à l'axe de la cosse (42).

7. Agencement de palier selon l'une quelconque des revendications 1 à 6, **caractérisé par** un dispositif anti-torsion de la cosse (42) par rapport à l'appareillage de support, dans lequel le dispositif anti-torsion est formé à partir d'un renfort (60) axial qui est réalisé à la périphérie de la cosse (42) et qui est conçu pour pénétrer dans une rainure (62) axiale correspondante de l'échancrure (30) de l'appareillage de support.

8. Agencement de palier selon l'une quelconque des revendications 1 à 7, **caractérisé en ce que** la cosse (42) présente, à la périphérie, une butée pour être placée vers l'appareillage de support.

9. Agencement de palier selon la revendication 8, **caractérisé en ce que** la butée est formée par un bord (46) à anneaux.

10. Agencement de palier selon l'une quelconque des revendications 1 à 9, **caractérisé en ce que** l'appareillage de support est une partie (28) de support d'un cadre (18) d'une vitre arrière (16) d'une capote de cabriolet et **en ce que** l'élément de construction est un guidon de vitre arrière (22) d'une tringlerie de capote (14) de la capote de cabriolet.
